# EUROPEAN PATENT APPLICATION

(11) **EP 4 481 926 A1**
(43) Date of publication of application: **25.12.2024**
(21) Application number: 23773797.8
(22) Date of filing: 20.03.2023
(51) Int. Cl.: H01M 50/40, H01M 50/403, H01M 50/417

(54) **COMPOSITE OIL-BASED SEPARATOR AND PREPARATION METHOD THEREFOR, AND SECONDARY BATTERY**

(30) Priority: 21.03.2022 CN 202210278636
(71) Applicant: Huizhou Liwinon Electronic Technology Co., Ltd., Huizhou, Guangdong 516100 (CN)
(72) Inventor: LAI, Xulun, Huizhou, Guangdong 516100 (CN); CHEN, Jie, Huizhou, Guangdong 516100 (CN); LI, Zaibo, Huizhou, Guangdong 516100 (CN); XIANG, Haibiao, Huizhou, Guangdong 516100 (CN)
(74) Representative: Bury & Bury
(86) International application number: PCT/CN2023/082543
(87) International publication number: WO 2023/179550

(57) **Abstract**

The present invention relates to the technical field of separators, and in particular to a composite oil-based separator and a preparation method therefor. The composite oil-based separator comprises a base film and a moisture retention coating applied on at least one side surface of the base film, wherein the moisture retention coating comprises an inorganic filler, a bonding polymer, and a moisture retention polymer. The composite oil-based separator in the present invention is provided with the moisture retention coating, so that a layer structure having moisture can be formed on the surface of the base film, thereby reducing the electrostatic intensity of the composite oil-based separator; thus, when the separator is applied to a battery cell and wound, wrinkling would not occur.

## Description

### TECHNICAL FIELD

The present disclosure belongs to the technical field of secondary batteries, and in particular relates to a composite oil-based separator and a preparation method thereof, and a secondary battery.

### BACKGROUND

With the characteristics of high operating voltage, high energy density, long cycle life, no memory effect and no pollution, lithium-ion batteries are the main energy source for various electronic products, and green, environmentally friendly and pollution-free secondary batteries. At the same time, lithium-ion batteries are in line with the development trend of energy and environmental protection in the world today, resulting in a sharp increase of use in various industries. As a result, the safety, capacity, fast charging performance and the like of the lithium batteries have attracted more and more attention, especially are urgently solved in the field of fast charging.

The four key materials of a lithium-ion battery are positive electrode material, negative electrode material, electrolyte and separator. The main function of the separator is to isolate the positive electrode from the negative electrode and prevent electrons from passing through, while allowing ions to pass through, thereby completing the rapid transmission of the lithium ions between the positive electrode and the negative electrode during charging and discharging. On the basis of the safety and capacity of the lithium battery, in order to improve the fast charging performance of a battery cell, the liquid absorption and retention properties of the separator have become the focus of research. At present, people increase the liquid absorption and retention properties of the separator by coating a water-based polymer coating or an oil-based polymer coating on the separator, but a water-based separator may currently only achieve fast charging with a magnification rate of below 3C, and an oil-based separator is adopted for fast charging with a higher magnification rate. However, the oil-based separator greatly affects the winding of the battery cell due to its great static electricity, and has a low battery cell qualification rate.

### SUMMARY

One of the objects of the present disclosure is to provide a composite oil-based separator in view of the shortcomings in the existing technology, which may form a layer structure having moisture on the surface of a base membrane and reduce the electrostatic strength of the composite oil-based separator, such that the separator does not wrinkle when being applied into a battery cell for winding, and then the quality of a produced product is improved.

To achieve the above object, the present disclosure adopts the following technical solution.

A composite oil-based separator includes a base membrane and a moisturizing coating applied onto at least one side surface of the base membrane, wherein the moisturizing coating includes an inorganic filler, an adhesive polymer and a moisturizing polymer.

Preferably, a ratio of the adhesive polymer to the moisturizing polymer to the inorganic filler in parts by weight is 20-90: 0.1-1: 10-80.

Preferably, the adhesive polymer is one or more of polyvinylidene fluoride, polyvinylidene fluoride-hexafluoropropylene copolymer, polyvinylidene fluoride homopolymer, aramid, and fluoropolymer.

Preferably, the moisturizing polymer is one or more of polyethylene glycol, polypropylene glycol, tripropylene glycol, ethylene glycol, and polyvinyl acetate.

Preferably, the inorganic filler is one or more of alumina, magnesium hydroxide, aluminum hydroxide, titanium dioxide, silicon dioxide, and boehmite.

Preferably, the moisturizing coating has a thickness of 0.5 µm-5 µm.

Preferably, the base membrane is polyethylene (PE), polypropylene (PP), polyimide (PI), aramid, a PE/PP/PE composite membrane or a ceramic composite isolating membrane, and the base membrane has a melting point of 130°C-500°C, a thickness of 3 µm-14 µm, a porosity of 30%-50%, and an air permeability of 30 sec/100 cc - 300 sec/100 cc.

A second object of the present disclosure is to provide a method for preparing a composite oil-based separator in view of the shortcomings in the existing technology, and the method is simple to operate and has good controllability.

To achieve the above object, the present disclosure adopts the following technical solution.

A method for preparing a composite oil-based separator includes the following steps:
step S1: stirring and dispersing part of an organic solvent and an adhesive polymer to obtain a glue solution;
step S2: adding the glue solution into a moisturizing polymer to be stirred and dispersed, so as to obtain a moisturizing glue solution;
step S3: mixing and dispersing the remaining organic solvent and inorganic filler into an inorganic filler dispersion;
step S4: mixing, dispersing, stirring and grinding the moisturizing glue solution and the inorganic filler dispersion, to obtain a moisturizing slurry; and
step S5: applying the moisturizing slurry on at least one surface of a base membrane, forming a moisturizing coating after solidification, and obtaining the composite oil-based separator after rinsing and drying.

Preferably, the step S3 further includes adding a pore-forming agent in a ratio of 0.01-5 parts by weight to the inorganic filler dispersion.

Preferably, in the step S5, the solidification is carried out in a solidification tank, the solidification tank has a temperature of 10-18°C and a solution concentration of 10%-40%, and the solution in the solidification tank is one or more of N-methyl-2-pyrrolidone (NMP), dimethylacetamide (DMAC), acetone, and dimethyl sulfoxide.

Preferably, in the step S5, the rinsing is carried out in a rinsing tank, the temperature of the rinsing tank is 20-30°C, the concentration of the moisturizing solution in the rinsing tank is 0.1%-1%, and the organic solvent has a concentration of 0.01%-1%.

A third object of the present disclosure is to provide a secondary battery in view of the shortcomings in the existing technology, which has good antistatic properties and liquid absorption and retention properties.

To achieve the above objects, the present disclosure adopts the following technical solution.

A secondary battery includes the above composite oil-based separator.

Compared with the existing technology, the beneficial effects of the present disclosure are: the composite oil-based separator in the present disclosure is provided with the moisturizing coating. The moisturizing polymer is incorporated in an oil-based moisturizing coating, and then the moisturizing coating is formed by coating. The prepared moisturizing coating has good antistatic properties and high liquid absorption/liquid retention properties, high lithium-ion conductivity and high battery cell hardness, thus significantly reducing the defects caused by battery cell winding, improving the production efficiency and product qualification rate; and the high magnification rate cycle function of the battery cell can achieve the fast charging performance of the battery cell.

### BRIEF DESCRIPTION OF DRAWINGS

FIG. 1 is an SEI (Solid Electrolyte Interface) diagram of a composite oil-based separator of the present disclosure.
FIG. 2 is a flow chart of preparing a composite oil-based separator of the present disclosure.
FIG. 3 is a graph showing wettability test results of Example 1 of a composite oil-based separator of the present disclosure.
FIG. 4 is a graph showing wettability test results of Comparative example 1 of the present disclosure.
FIG. 5 is a graph showing wettability test results of Comparative example 2 of the present disclosure.

### DETAILED DESCRIPTION

1. A composite oil-based separator includes a base membrane and a moisturizing coating applied onto at least one side surface of the base membrane, wherein the moisturizing coating includes an inorganic filler, an adhesive polymer and a moisturizing polymer.

The composite oil-based separator in the present disclosure may form a layer structure having moisture on the surface of the base membrane, and reduce the electrostatic strength of the composite oil-based separator, thus making the separator not wrinkle when being applied into a battery cell for winding. The moisturizing coating of the composite oil-based separator in the present disclosure contains the inorganic filler, which plays a role in supporting a skeleton in the coating, so as to provide a certain resistance to thermal shrinkage, and meantime inorganic particles have certain hygroscopicity and can reduce the static electricity of the separator to a certain extent. The moisturizing polymer is hydrophilic and can absorb moisture, thus reducing the electrostatic strength of the separator. The inorganic filler may be firmly bonded to the moisturizing polymer through the adhesive polymer, to form a stable structure. Combined with the characteristics of the oil-based separator and the above-mentioned moisturizing coating making the separator have a relatively low electrostatic strength, the composite oil-based separator in the present disclosure can achieve fast charging with the rate performance of 3C or above.

Preferably, a ratio of the adhesive polymer to the moisturizing polymer to the inorganic filler in parts by weight is 20-90: 0.01-1: 10-80. The ratio of the adhesive polymer to the moisturizing polymer to the inorganic filler in parts by weight is 20:0.01: 10, 25:0.01:10, 30:0.01:10, 40:0.01:10, 50:0.01:10, 60:0.01:10, 70:0.01:10, 80:0.01:10, 90:0.01:10, 25:0.04:15, 25:0.8:15, 25:0.9:15, 25:0.2:15, 25:0.4:30, 25:0.4:50, 25:0.4:60, 25:0.4:80, 25:0.1:15, 27:1:10, 27:0.7:10, 20:0.1:10, 20:0.1:10. The ratio of the adhesive polymer to the moisturizing polymer to the inorganic filler in parts by weight has a great influence on the performance of the moisturizing coating formed by coating. The too much content of the adhesive polymer easily affects the moisturizing effect of the moisturizing coating, thus affecting the antistatic property of the moisturizing coating. The too little content of the adhesive polymer easily causes the moisturizing coating to be weakly bonded, the inorganic filler can support the moisturizing coating and make the moisturizing coating have a certain mechanical strength. At the same time, the inorganic filler can increase the liquid absorption property of the moisturizing coating and improve the liquid absorption and retention properties, thereby improving the antistatic property of the moisturizing coating.

Preferably, the adhesive polymer is one or more of polyvinylidene fluoride, polyvinylidene fluoride-hexafluoropropylene copolymer, polyvinylidene fluoride homopolymer, aramid, and fluoropolymer. The adhesive polymer can achieve an adhesive effect, and make the inorganic filler bond to the moisturizing polymer to form a firm reactant. The melting point of the adhesive polymer is 100°C-500°C, and preferably, the melting point of the adhesive polymer is 100°C, 200°C, 300°C, 400°C, and 500°C.

Preferably, the moisturizing polymer is one or more of polyethylene glycol, polypropylene glycol, tripropylene glycol, ethylene glycol, and polyvinyl acetate. The moisturizing polymer can achieve a moisturizing effect and make the separator have a better moisturizing performance, thus reducing the electrostatic strength of the separator.

Preferably, the inorganic filler is one or more of alumina, magnesium hydroxide, aluminum hydroxide, titanium dioxide, silicon dioxide, and boehmite. The inorganic filler plays a role in supporting a skeleton in the coating and can provide a certain resistance to thermal shrinkage. At the same time, the inorganic particles have certain hygroscopicity and can reduce the static electricity of the separator to a certain extent. The inorganic filler may be or not be added in the moisturizing coating, and the moisturizing coating added with the inorganic filler has a better effect.

Preferably, the moisturizing coating has a thickness of 0.5 µm-5 µm. Specifically, the moisturizing coating has a thickness of 0.5 µm, 1 µm, 1.5 µm, 2 µm, 2.5 µm, 3 µm, 3.5 µm, 4 µm, 4.5 µm, and 5 µm.

Preferably, the base membrane is PE, PP, PI, aramid, a PE/PP/PE composite membrane or a ceramic composite isolating membrane, and the base membrane has a melting point of 130°C-500°C, a thickness of 3 µm-14 µm, a porosity of 30%-50%, and an air permeability of 30 sec/100 cc - 300 sec/100 cc. The base membrane in the present disclosure may be a PE membrane, a PP membrane, a PI membrane, an aramid membrane, a PE/PP/PE composite membrane or ceramic composite membrane. The melting point of the base membrane is 130°C-500°C. Specifically, the melting point of the base membrane is 130°C, 140°C, 150°C, 160°C, 170°C, 180°C, 190°C, 200°C, 220°C, 240°C, 280°C, 320°C, 340°C, 380°C, 420°C, 460°C, 480 °C, and 500°C.

2. A method for preparing a composite oil-based separator includes the following steps:
step S1: stirring and dispersing part of an organic solvent and an adhesive polymer to obtain a glue solution;
step S2: adding the glue solution into a moisturizing polymer to be stirred and dispersed, so as to obtain a moisturizing glue solution;
step S3: mixing and dispersing the remaining organic solvent and inorganic filler into an inorganic filler dispersion;
step S4: mixing, dispersing, stirring and grinding the moisturizing glue solution and the inorganic filler dispersion, to obtain a moisturizing slurry; and
step S5: applying the moisturizing slurry on at least one surface of a base membrane, forming a moisturizing coating after solidification, and obtaining the composite oil-based separator after rinsing and drying.

The method for preparing a composite oil-based separator in the present disclosure has simple process, safety, high equipment adaptability, simple operation, good controllability, and easy mass production. The composite oil-based separator in the present disclosure is provided with the moisturizing coating. The moisturizing polymer is incorporated in the oil-based moisturizing coating, and then the moisturizing coating is formed by coating. The prepared moisturizing coating has good antistatic properties, high liquid absorption/liquid retention properties, high lithium-ion conductivity and high battery cell hardness, so that the separator is not prone to wrinkle when applied in the preparation of lithium batteries, and has good production efficiency and quality; and the high magnification rate cycle function of the battery cell can achieve the fast charging performance of the battery cell. At the same time, the temperature of the solidification tank and the final solution ratio of the rinsing tank are controlled to achieve high anti-electrostatic, high liquid absorption/liquid retention properties, high lithium-ion conductivity and high battery cell hardness of the oil-based separator to ensure the safety and production efficiency of the lithium batteries, as well as the high magnification rate cycle function of the battery cell, thus achieving the fast charging performance of the battery cell. The coating method is any one of dip coating, extrusion coating, gravure coating, and slit coating. The organic solvent is one or more of NMP, DMAC, acetone, and dimethyl sulfoxide.

In the present disclosure, by incorporating the moisturizing polymer into the slurry, the moisturizing ability inside the separator is improved and the moisturizing solution is incorporated through the rinsing tank, so that an invisible moisturizing layer is adsorbed on the outside of the separator, thereby significantly reducing the electrostatic strength of the separator (the electrostatic strength level is consistent with that of the water-based coating separator), which can significantly reduce defects caused by battery cell winding.

In the present disclosure, by introducing a pore-forming agent, preforming may be carried out inside the coating first, the concentration of a solidification bath is controlled at the same time, and quick phase splitting during phase transformation is improved, such that dense pores are formed on the surface of the coating, which is conducive to the rapid transmission of lithium ions and achieves the high ionic conductivity of the separator.

Preferably, the step S3 further includes adding the pore-forming agent in a ratio of 0.01-5 parts by weight to the inorganic filler dispersion. The pore-forming mechanism of the pore-forming agent is the principle of phase transformation. When the slurry is immersed in the solidification bath, the solvent and non-solvent will diffuse into each other through a liquid membrane/solidification bath interface. The exchange between the organic solvent and the non-solvent reaches a certain extent, and at this time, a casting solution becomes a thermodynamically unstable system, causing phase separation occurred to the casting solution. After the phase separation of the film-making liquid system, the solvent and non-solvent are further exchanged, and the agglomeration of the membrane pores, interphase flow, and solidification of the polymer rich phase to form a membrane occur. Because the organic solvent is infinitely mixed with the non-solvent in the solidification tank, the organic solvent and the non-solvent in the coating exchange with each other, and the polymer is formed and precipitated when exposed to water, forming a microporous coating structure. The pore-forming agent is one or more of polyvinyl pyrrolidone (PVP), water, lithium chloride or glycerol. Preferably, the pore-forming agent is the lithium chloride. Some pore-forming agents are water-based liquids. If these pore-forming agents are directly added to the moisturizing glue solution, there will be a risk of pre-gelation, which will affect the stability and shelf life of the moisturizing glue solution. The shelf life will be reduced by 7 days from 30 days. The pore-forming agent is first mixed with the inorganic filler and the organic solvent, and then added to the moisturizing glue solution to ensure the stability of the slurry. The shelf life of the moisturizing slurry can be up to 30 days.

Preferably, in the step S5, the solidification is carried out in the solidification tank, the solidification tank has a temperature of 10-18°C and a solution concentration of 10%-40%, and the solution in the solidification tank is one or more of NMP, DMAC, acetone, and dimethyl sulfoxide. Through the synergistic effect of the moisturizing polymer, the pore-forming agent and the solidification tank temperature, the present disclosure can effectively eliminate the large finger-like pores in the cross-section of the separator coating, causing the cross-section of the coating to become dense large pores, thereby achieving the high liquid retention capacity while improving the liquid absorption capacity of the separator. The temperature of the solidification tank is 10°C, 12°C, 14°C, 16°C, or 18°C, and the solution concentration in the solidification tank is 10%, 20%, 30%, or 40%. The surface of the base membrane is coated with the moisturizing slurry and then passes through the solidification tank, so that the moisturizing slurry solidifies in the solidification tank to form the moisturizing coating. Setting a certain temperature and concentration of the solidification tank may make the moisturizing slurry have a better solidification effect.

Preferably, in the step S5, the rinsing is carried out in a rinsing tank, the temperature of the rinsing tank is 20-30°C, the concentration of the moisturizing solution in the rinsing tank is 0.1%-1%, and the organic solvent has a concentration of 0.01%-1%. After solidification, the moisturizing separator is rinsed in the rinsing tank to wash away the residual organic solvent in the solidification tank, and the moisturizing coating absorbs the moisturizing solution in the rinsing tank, so that the composite oil-based separator has a relatively low antistatic strength, being conducive to making the composite oil-based separator not wrinkle when being applied into a battery cell for winding, thereby improving the production quality of the battery cell.

2. A secondary battery includes the above-mentioned composite oil-based separator. The secondary battery in the present disclosure has good antistatic properties and liquid absorption and retention properties.

The secondary battery may be a lithium-ion battery, a sodium-ion battery, a magnesium-ion battery, a calcium-ion battery, and a potassium-ion battery. Preferably, the following secondary battery takes the lithium-ion battery as an example, the lithium-ion battery includes a positive electrode plate, a negative electrode plate, a separator, an electrolyte and a housing, the separator separates the positive electrode plate from the negative electrode plate, and the housing is used to store the positive electrode plate, negative electrode plate, separator and electrolyte. The separator is the above-mentioned composite oil-based separator. The positive electrode plate includes a positive electrode current collector and a positive electrode active material layer disposed on at least one surface of the positive electrode current collector, the positive electrode active material layer includes a positive electrode active material, the positive electrode active material may include but not limited to one or more of compounds represented by the chemical formula such as LiₐNiₓCo_{y}M_{z}O_{2-b}N_{b} (wherein 0.95≤a≤1.2, x>0, y≥0, z≥0, and x+y+z=1, 0≤b≤1, M is selected from one or more of Mn and Al, N is selected from one or more of F, P, S), and the positive electrode active material may also include but not limited to one or more of LiCoO₂, LiNiO₂, LiVO₂, LiCrO₂, LiMn₂O₄, LiCoMnO₄, Li₂NiMn₃O₈, LiNi_{0.5}Mn_{1.5}O₄, LiCoPO₄, LiMnPO₄, LiFePO₄, LiNiPO₄, LiCoFSO₄, CuS₂, FeS₂, MoS₂, NiS, TiS₂, etc. The positive electrode active material may also be modified, the method of modifying the positive electrode active material should be known to those skilled in the art. For example, the positive electrode active material may be modified by coating, doping and other methods. The materials used for the modification treatment may include but not limited to one or more of Al, B, P, Zr, Si, Ti, Ge, Sn, Mg, Ce, W, etc. However, the positive electrode current collector is usually a structure or part that collects current, may be made of any material in the art that suitably serves as the positive electrode current collector for the lithium-ion battery. For example, the positive electrode current collector may include but not limited to metal foil, etc., more specifically, may include but not limited to aluminum foil, etc.

The negative electrode plate includes a negative electrode current collector and a negative electrode active material layer disposed on the surface of the negative electrode current collector. The negative electrode active material layer includes a negative electrode active material. The negative electrode active material may include but not limited to one or more of graphite, soft carbon, hard carbon, carbon fiber, mesocarbon microbeads, silicon-based materials, tin-based materials, lithium titanate or other metals that may form alloys with lithium, etc. The graphite may be selected from one or more of artificial graphite, natural graphite and modified graphite; the silicon-based material may be selected from one or more of elemental silicon, silicon oxide compounds, silicon carbon composites, and silicon alloys. The tin-based material may be selected from one or more of elemental tin, tin oxide compounds, and tin alloys. The negative electrode current collector is usually a structure or part that collects current, the negative electrode current collector may be made of various materials in the art that suitably serve as the negative electrode current collector for lithium-ion battery. For example, the negative electrode current collector may include but not limited to metal foil, etc., more specifically, may include but not limited to copper foil, etc.

The lithium-ion battery also includes an electrolyte, which includes an organic solvent, an electrolyte lithium salt and an additive. The electrolyte lithium salt may be LiPF₆ and/or LiBOB used in a high-temperature electrolyte; or at least one of LiBF₄, LiBOB, and LiPF₆ used in a low-temperature electrolyte; or at least one of LiBF₄, LiBOB, LiPF₆ and LiTFSI used in the overcharge prevention electrolyte; or at least one of LiClO₄, LiAsF₆, LiCF₃SO₃, and LiN(CF₃SO₂)₂. The organic solvent may be cyclic carbonate, including PC (polycarbonate) and EC (ethylene carbonate); or chain carbonate, including DFC, DMC (dimethyl carbonate), or EMC (ethyl methyl carbonate); or a carboxylic acid ester, including MF, MA (methyl acrylate), EA (ethyl acrylate), MP, etc. The additive includes but not limited to at least one of a film-forming additive, a conductive additive, a flame retardant additive, an overcharge prevention additive, an additive to control the H₂O and HF content in the electrolyte, an additive to improve the low-temperature performance, and a multi-functional additive.

Preferably, the material of the housing is one of stainless steel or aluminum-plastic film. More preferably, the material of the housing is aluminum-plastic film.

The present disclosure will be further described in detail below with reference to the specific embodiments and the description drawings, but the embodiments of the present disclosure are not limited thereto.

### Example 1

### Preparation of the positive electrode plate:

Lithium cobalt oxide, conductive agent superconducting carbon (Super-P), and binder polyvinylidene fluoride (PVDF) were evenly mixed at a mass ratio of 97:1.5:1.5 to prepare a lithium-ion battery positive electrode slurry with a certain viscosity. The slurry was applied onto a current collector aluminum foil, then the current collector aluminum foil coated with the slurry was cold-pressed after being dried at 85°C. The cold-pressed current collector aluminum foil was subjected to edge trimming, piece cutting and strip dividing, the strip-divided current collector aluminum foil was dried at 110°C for 4 h under vacuum conditions, and tabs were welded to prepare the lithium-ion battery positive electrode plate.

### Preparation of the negative electrode plate:

Graphite, conductive agent superconducting carbon (Super-P), thickener sodium carboxymethylcellulose (CMC) and binder styrene-butadiene rubber (SBR) were made into a slurry at a mass ratio of 96:2.0:1.0:1.0. The prepared slurry was coated on the current collector copper foil, the current collector copper foil coated with the slurry was dried at 85°C, and subjected to edge trimming, piece cutting and strip dividing, the strip-divided current collector copper foil was dried at 110°C for 4 h under vacuum conditions, and tabs were welded to prepare the lithium-ion battery negative electrode plate.

### Preparation of the electrolyte:

Lithium hexafluorophosphate (LiPF₆) was dissolved in a mixed solvent composed of ethylene carbonate (EC), dimethyl carbonate (DMC) and ethyl methyl carbonate (EMC) (with a mass ratio of 1:2:1), to obtain the electrolyte with a concentration of 1 mol/L.

### Preparation of the separator:

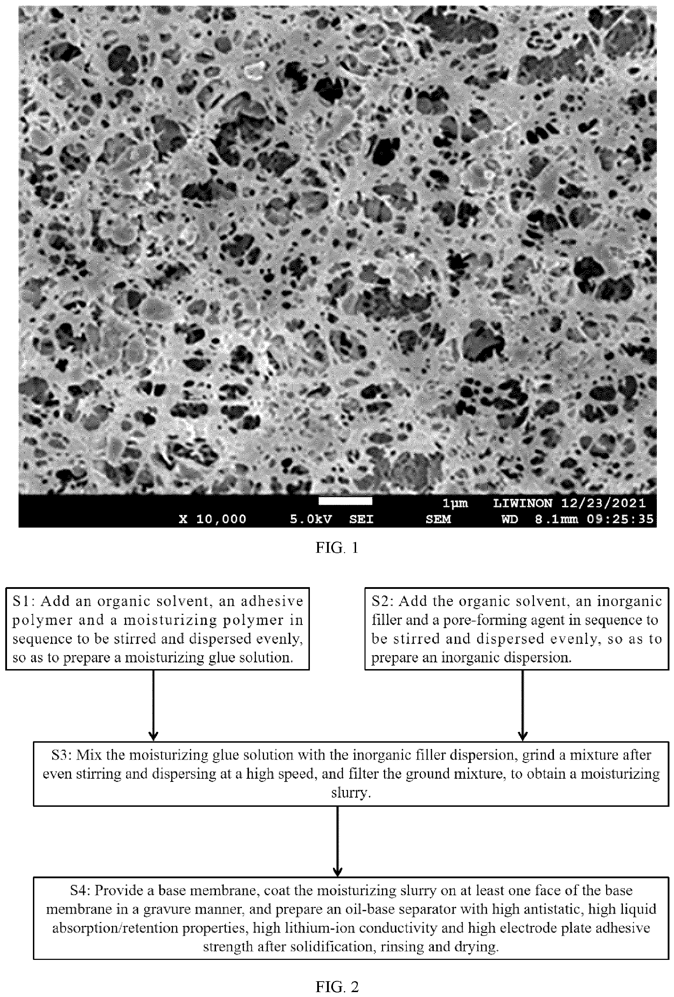

A method for preparing a composite oil-based separator, as shown in FIG. 2, includes the following steps:
step S1: 3.3 parts of polyvinylidene fluoride and 36.7 parts of polyvinylidene fluoride copolymer were weighed as the adhesive polymer. The adhesive polymer was separately added in 450 parts of NMP according to the steps for being stirred and dispersed, with a stirring speed of 30 R, a dispersion speed of 2000 R and stirring time of 30 min respectively, to obtain a glue solution;
step S2: 0.1 part of polyethylene glycol was added to the glue solution for being stirred and dispersed, with a stirring speed of 25 R, a dispersion speed of 2000 R and stirring time of 15 min respectively, to obtain a moisturizing glue solution;
step S3: 60 parts of alumina were weighed as the inorganic filler and 0.1 part of lithium chloride was weighed as the pore-forming agent. The inorganic filler and the pore-forming agent were separately added in 45 parts of NMP according to the steps for being stirred and dispersed, with a stirring speed of 30 R, a dispersion speed of 2500 R and stirring time of 30 min respectively, to obtain an inorganic dispersion;
step S4: the moisturizing glue solution was mixed with the inorganic filler dispersion at a stirring speed of 30 R, a dispersion speed of 2500 R and time of 30 min. After high-speed dispersion and stirring, a mixture was ground at a grinding speed of 700 rpm and grinding time of 60 min, and the mixture was filtered after being ground, to obtain the moisturizing slurry; and
step S5: the moisturizing slurry was applied to a 1.5 µm moisturizing coating on surfaces of both sides of the base membrane, then the moisturizing slurry was solidified to form the moisturizing coating. The composite oil-based separator was obtained after rinsing and drying the moisturizing coating, and the composite oil-based separator had high antistatic properties, as shown in FIG. 1.

The ratio of the adhesive polymer to the pore-forming agent to the moisturizing polymer to the inorganic filler in parts by weight was 40:0.1:0.1:60.

The base membrane was a 5 µm PE membrane with a porosity of 40% and an air permeability of 200 sec/100 cc. The solution in the solidification tank was a mixture of N-methylpyrrolidone and dimethylacetamide with a mass ratio of 1:1.5. The solidification tank had a temperature of 15°C and a concentration of 30%. Finally, the rinsing tank had a polypropylene glycol concentration of 0.3% and a temperature of 25°C.

### Preparation of the lithium-ion battery:

The above-mentioned positive electrode plate, antistatic separator and positive electrode plate were wound into a battery cell. The antistatic separator was located between the positive electrode plate and the negative electrode plate. The positive electrode was led out by spot welding of aluminum tabs, and the negative electrode was led out by spot welding of nickel tabs; and then the battery cell was placed in an aluminum-plastic packaging bag. The above-mentioned electrolyte was injected into the aluminum-plastic packaging bag, and the lithium-ion battery was prepared through processes such as packaging, formation and capacity.

### Example 2

The difference from Example 1 is that the ratio of the adhesive polymer to the pore-forming agent to the moisturizing polymer to the inorganic filler in parts by weight was 20: 1.5:0.5:30.

The rest is the same as Example 1, and no repetition will be made here.

### Example 3

The difference from Example 1 is that the ratio of the adhesive polymer to the pore-forming agent to the moisturizing polymer to the inorganic filler in parts by weight was 20: 1.8:0.5:30.

The rest is the same as Example 1, and no repetition will be made here.

### Example 4

The difference from Example 1 is that the ratio of the adhesive polymer to the pore-forming agent to the moisturizing polymer to the inorganic filler in parts by weight was 20:2:0.5:30.

The rest is the same as Example 1, and no repetition will be made here.

### Example 5

The difference from Example 1 is that the ratio of the adhesive polymer to the pore-forming agent to the moisturizing polymer to the inorganic filler in parts by weight was 20:0.2:0.5:30.

The rest is the same as Example 1, and no repetition will be made here.

### Example 6

The difference from Example 1 is that the ratio of the adhesive polymer to the pore-forming agent to the moisturizing polymer to the inorganic filler in parts by weight was 40:0.2:0.5:30.

The rest is the same as Example 1, and no repetition will be made here.

### Example 7

The difference from Example 1 is that the ratio of the adhesive polymer to the pore-forming agent to the moisturizing polymer to the inorganic filler in parts by weight was 60:0.2:0.5:30.

The rest is the same as Example 1, and no repetition will be made here.

### Example 8

The difference from Example 1 is that the ratio of the adhesive polymer to the pore-forming agent to the moisturizing polymer to the inorganic filler in parts by weight was 80:0.2:0.5:30.

The rest is the same as Example 1, and no repetition will be made here.

### Example 9

The difference from Example 1 is that the ratio of the adhesive polymer to the pore-forming agent to the moisturizing polymer to the inorganic filler in parts by weight was 40:0.2:0.8:30.

The rest is the same as Example 1, and no repetition will be made here.

### Example 10

The difference from Example 1 is that the ratio of the adhesive polymer to the pore-forming agent to the moisturizing polymer to the inorganic filler in parts by weight was 20:0.2:0.2:30.

The rest is the same as Example 1, and no repetition will be made here.

### Comparative example 1

A composite oil-based separator included a base membrane as well as a ceramic slurry and a water-based polymer slurry that were arranged on the surface of the base membrane. A 2 µm ceramic coating was first coated on the base material using a slant roller gravure coater to obtain a conventional ceramic membrane. Then a 0.5 µm polymer coating was separately coated on both sides of the ceramic membrane using the slant roller gravure coater, and after the coated polymer coating was dried, the water-based polymer composite membrane was obtained.

### Comparative example 2

A composite oil-based separator included a laminated support layer and an organic/inorganic particle blend coating layer, and its preparation method included the following steps:
step 1: a water-based adhesive, surfactant, dispersant, thickener and the like were dissolved with deionized water as a solvent under conditions of normal temperature and high speed stirring to prepare a solution; then polymer particles and inorganic particles were added into the solution to be stirred evenly at a high speed, and a water-based slurry was prepared; and the slurry included the following substances in mass percentage: 1.2% of water-soluble polymer thickener, 1.8% of water-based dispersant, 1.5% of surfactant, 3.5% of water-based adhesive, 32% of polymer particles and inorganic particles, and 60% of deionized water;
step 2: the water-based slurry prepared in step 1 was applied onto the support layer separator using micro-gravure roller coating at a coating rate of 20 m/min; and
step 3: the coating membrane obtained in the previous step was dried in a 60°C oven to obtain the water-based separator.

The micro-gravure roller coating was adopted, with a coating speed of 40 m/min. The coating base membrane was a polypropylene microporous membrane with a porosity of 42%; and a three-level oven was used for drying, the temperatures of the ovens at each level were 50°C, 60°C, and 65°C, respectively. The thickness of the coating layer was 1.5 µm, and the thickness of the coated membrane was 19 µm.

Performance test: the separators prepared in Examples 1-10 and Comparative examples 1-2 were subjected to performance test in aspects of liquid absorption rate, electrostatic strength and puncture strength, with test results recorded in Table 1.

**Table 1**

| Item | Liquid absorption rate (%) | Electrostatic strength (kv) | Puncture strength (g) | Item | Liquid absorption rate (%) | Electrostatic strength (kv) | Puncture strength (g) |
|---|---|---|---|---|---|---|---|
| Example 1 | 11.2 | 0.1 | 290 | Example 2 | 11 | 0.1 | 285 |
| Example 3 | 10.9 | 0.1 | 286 | Example 4 | 10.8 | 0.1 | 287 |
| Example 5 | 11.0 | 0.1 | 286 | Example 6 | 11.0 | 0.1 | 285 |
| Example 7 | 10.8 | 0.1 | 285 | Example 8 | 10.9 | 0.1 | 285 |
| Example 9 | 10.9 | 0.1 | 285 | Example 10 | 10.8 | 0.1 | 286 |
| Comparative example 1 | 9 | 0.1 | 270 | Comparative example 2 | 10.2 | 0.1 | 282 |

It can be concluded from Table 1 that the separator in the present disclosure has better liquid absorption rate, electrostatic strength and puncture strength compared to Comparative examples 1 and 2. The separator in the present disclosure is provided with the moisturizing coating, so that the separator has a good liquid absorption rate, which can be up to a 11.2%. Moreover, the oil-based separator in the present disclosure has the same electrostatic strength as the water-based separators in Comparative examples 1 and 2, that is, the oil-based separator in the present disclosure has a relatively low electrostatic strength and is less prone to wrinkle during production and use. It can be concluded from the comparison of Examples 1-10 that when the ratio of the adhesive polymer to the pore-forming agent to the moisturizing polymer to the inorganic filler in parts by weight is 40:0.1:0.1:60, the prepared separator has better performance.

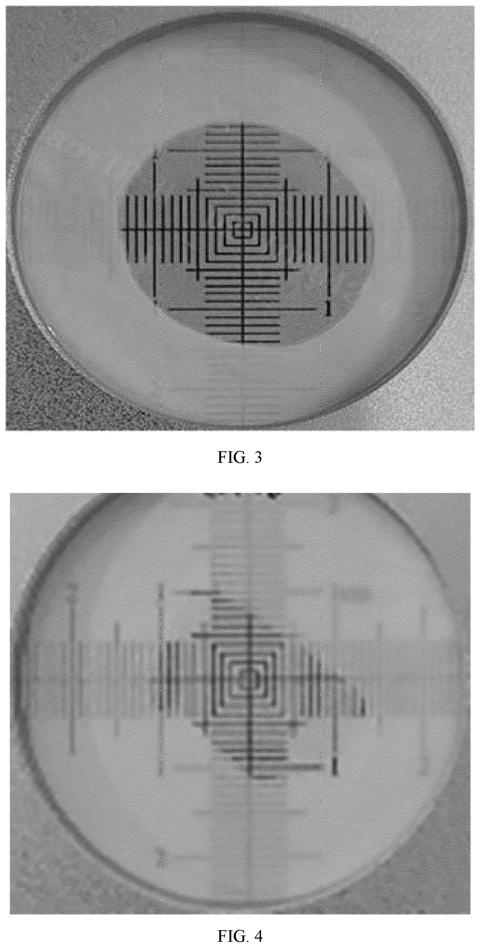

Wettability test: a 1 mL syringe was used to take 1 mL of electrolyte, 1 drop of electrolyte was dropped into the separator with the same area, and the area that 1 drop of electrolyte spread within 1 min was observed to compare the wettability of the separator to the electrolyte. The test results of Example 1, Comparative examples 1 and 2 are as shown in FIG. 3 - FIG. 5, respectively.

The performances of Example 1, Comparative examples 1 and 2 were compared below, with the comparison results recorded in Table 2.

**Table 2**

| Item | | Unit | Example 1 | Comparative example 1 | Comparative example 2 |
|---|---|---|---|---|---|
| Base membrane | | | PE: 5 µm | PE: 5 µm | PE: 5 µm |
| Thickness of coating film | | µm | 8.1 | 8.0 | 8.8 |
| Coating thickness | | µm | 3.1 | 3.0 | 3.8 |
| Coating porosity | | % | 65 | 50 | 55 |
| Puncture strength | | g | 290 | 270 | 282 |
| Tensile strength | MD | kgf/cm² | 3116 | 2828 | 3003 |
| | TD | | 2250 | 2100 | 2150 |
| Thermal shrinkage 90°C/1h | MD | % | 2.7 | 1.0 | 3.0 |
| | TD | | 0.3 | 0.6 | 1.0 |
| Dry adhesive strength of coating and electrode plate | | N/m | 18 | 5 | 8 |
| Bending strength of battery cell | | MPa | 35 | 20 | 25 |
| Liquid absorption rate | | g/m² | 11.2 | 9.0 | 10.2 |
| Liquid retention rate | | g/m² | 10 | 8.0 | 8.5 |
| Ionic conductivity | | S/cm | 3.6*10⁻³ | 1.9*10⁻³ | 2.0*10⁻³ |
| Electrostatic strength | | Kv | 0.1 | 0.1 | 0.1 |
| Drop diameter | | cm | 2.7 | 2.0 | 2.1 |

It can be concluded from Table 2 that the separator prepared by the present disclosure has better liquid absorption rate, liquid retention rate, ion conductivity and good antistatic ability compared to the separators of Comparative examples 1 and 2. Specifically, Example 1, Comparative examples 1 and 2 have greater coating porosity, stronger puncture strength, better thermal shrinkage, stronger dry adhesive strength, greater flexural strength, higher liquid absorption rate, higher liquid retention rate and higher ionic conductivity under conditions of almost the same coating membrane thickness and coating thickness. Moreover, the electrostatic strength of the oil-based separator in the present disclosure is equal to that of the water-based separator in Comparative examples 1 and 2. That is, the separator prepared by the present disclosure has good electrostatic strength and not prone to an electrostatic phenomenon during use or production, thus avoiding wrinkles and improving the product quality.

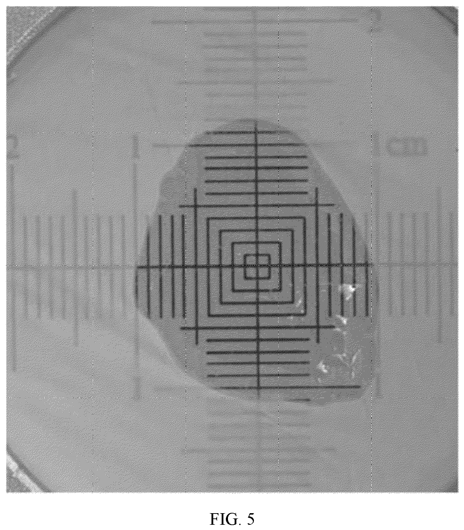

It can be concluded from FIG. 3 that the infiltration rate of the separator prepared by the present disclosure is about 1 cm circle, and the infiltration area is about 3.14 cm². It can be concluded from FIG. 4 that the infiltration rate of the separator of Comparative example 1 is less than the 1 cm circle, and the infiltration area is about 1 cm². It can be concluded from FIG. 5 that the infiltration rate of the separator of Comparative example 2 is greater than 0.5 of square area and less than 1 cm of square area. It can be concluded from this that the wettability of the separator in Example 1 of the present disclosure is greater than that of Comparative examples 1 and 2, and has better wetting effect.

Based on the disclosure and teaching of the above description, those skilled in the art to which the present disclosure belongs can also make changes and modifications to the above embodiments. Therefore, the present disclosure is not limited to the above-mentioned specific embodiments, and any obvious improvements, replacements or modifications made by those skilled in the art on the basis of the present disclosure fall within the protection scope of the present disclosure. In addition, although some specific terms are used in this specification, these terms are only for convenience of explanation and do not constitute any limitation to the present disclosure.

## Claims

1. A composite oil-based separator, **characterized by** comprising a base membrane and a moisturizing coating applied onto at least one side surface of the base membrane, the moisturizing coating comprises an inorganic filler, an adhesive polymer and a moisturizing polymer.

2. The composite oil-based separator according to claim 1, wherein a ratio of the adhesive polymer to the moisturizing polymer to the inorganic filler in parts by weight is from 20 to 90 : from 0.01 to 1 : from 10 to 80.

3. The composite oil-based separator according to claim 1 or 2, wherein the adhesive polymer is one or more of polyvinylidene fluoride, polyvinylidene fluoride-hexafluoropropylene copolymer, polyvinylidene fluoride homopolymer, aramid, and fluoropolymer.

4. The composite oil-based separator according to claim 1 or 2, wherein the moisturizing polymer is one or more of polyethylene glycol, polypropylene glycol, tripropylene glycol, ethylene glycol, and polyvinyl acetate.

5. The composite oil-based separator according to claim 1 or 2, wherein the inorganic filler is one or more of alumina, magnesium hydroxide, aluminum hydroxide, titanium dioxide, silicon dioxide, and boehmite.

6. The composite oil-based separator according to claim 1, wherein the moisturizing coating has a thickness of 0.5 µm to 5 µm.

7. The composite oil-based separator according to claim 1 or 6, wherein the base membrane is polyethylene, polypropylene, polyimide, aramid, a polyethylene/polypropylene/polyethylene composite membrane or a ceramic composite isolating membrane, and the base membrane has a melting point of 130°C to 500°C, a thickness of 3 µm to 14 µm, a porosity of 30% to 50%, and an air permeability of 30 sec/100 cc to 300 sec/100 cc.

8. A method for preparing a composite oil-based separator, **characterized by** comprising the steps of:
step S1: stirring and dispersing part of an organic solvent and an adhesive polymer to obtain a glue solution;
step S2: adding the glue solution into a moisturizing polymer to be stirred and dispersed, so as to obtain a moisturizing glue solution;
step S3: mixing and dispersing the remaining organic solvent and inorganic filler into an inorganic filler dispersion;
step S4: mixing, dispersing, stirring and grinding the moisturizing glue solution and the inorganic filler dispersion, to obtain a moisturizing slurry; and
step S5: applying the moisturizing slurry on at least one surface of a base membrane, forming a moisturizing coating after solidification, and obtaining the composite oil-based separator after rinsing and drying.

9. The method for preparing the composite oil-based separator according to claim 8, wherein the step S3 further comprises adding a pore-forming agent in a ratio of 0.01 to 5 parts by weight to the inorganic filler dispersion.

10. The method for preparing the composite oil-based separator according to claim 9, wherein in the step S5, the solidification is carried out in a solidification tank, the solidification tank has a temperature of 10°C to 18°C and a solution concentration of 10% to 40%, and a solution in the solidification tank is one or more of N-methyl-2-pyrrolidone, dimethylacetamide, acetone, and dimethyl sulfoxide.

11. The method for preparing the composite oil-based separator according to claim 10, wherein in the step S5, the rinsing is carried out in a rinsing tank, the temperature of the rinsing tank is 20°C to 30°C, the concentration of the moisturizing solution in the rinsing tank is 0.1% to 1%, and the organic solvent has a concentration of 0.01% to 1%.

12. A secondary battery, **characterized by** comprising the composite oil-based separator according to any one of claims 1-7.

## Amended claims

### Amended claims under Art. 19.1 PCT

1. A composite oil-based separator, **characterized by** comprising a base membrane and a moisturizing coating applied onto at least one side surface of the base membrane, wherein the moisturizing coating comprises an inorganic filler, an adhesive polymer and a moisturizing polymer;
wherein a ratio of the adhesive polymer to the moisturizing polymer to the inorganic filler in parts by weight is from 20 to 90 : from 0.01 to 1 : from 10 to 80; the moisturizing polymer is one or more of polyethylene glycol, polypropylene glycol, and polyvinyl acetate.

2. The composite oil-based separator according to claim 1, wherein the adhesive polymer is one or more of polyvinylidene fluoride, polyvinylidene fluoride-hexafluoropropylene copolymer, and aramid.

3. The composite oil-based separator according to claim 1, wherein the inorganic filler is one or more of alumina, magnesium hydroxide, aluminum hydroxide, titanium dioxide, silicon dioxide, and boehmite.

4. The composite oil-based separator according to claim 1, wherein the moisturizing coating has a thickness of 0.5 µm to 5 µm.

5. The composite oil-based separator according to claim 1 or 4, wherein the base membrane is polyethylene, polypropylene, polyimide, aramid, a polyethylene/polypropylene/polyethylene composite membrane or a ceramic composite isolating membrane, and the base membrane has a melting point of 130°C to 500°C, a thickness of 3 µm to 14 µm, a porosity of 30% to 50%, and an air permeability of 30 sec/100 cc to 300 sec/100 cc.

6. A method for preparing a composite oil-based separator, **characterized by** comprising the steps of:
step S1: stirring and dispersing part of an organic solvent and an adhesive polymer to obtain a glue solution;
step S2: adding the glue solution into a moisturizing polymer to be stirred and dispersed, so as to obtain a moisturizing glue solution;
step S3: mixing and dispersing the remaining organic solvent and inorganic filler into an inorganic filler dispersion;
step S4: mixing, dispersing, stirring and grinding the moisturizing glue solution and the inorganic filler dispersion, to obtain a moisturizing slurry; and
step S5: applying the moisturizing slurry on at least one surface of a base membrane, forming a moisturizing coating after solidification, and obtaining the composite oil-based separator after rinsing and drying.

7. The method for preparing the composite oil-based separator according to claim 6, wherein the step S3 further comprises adding a pore-forming agent in a ratio of 0.01 to 5 parts by weight to the inorganic filler dispersion.

8. The method for preparing the composite oil-based separator according to claim 7, wherein in the step S5, the solidification is carried out in a solidification tank, the solidification tank has a temperature of 10°C to 18°C and a solution concentration of 10% to 40%, and a solution in the solidification tank is one or more of N-methyl-2-pyrrolidone, dimethylacetamide, acetone, and dimethyl sulfoxide.

9. The method for preparing the composite oil-based separator according to claim 8, wherein in the step S5, the rinsing is carried out in a rinsing tank, the temperature of the rinsing tank is 20°C to 30°C, the concentration of the moisturizing solution in the rinsing tank is 0.1% to 1%, and the organic solvent has a concentration of 0.01% to 1%.

10. A secondary battery, **characterized by** comprising the composite oil-based separator according to any one of claims 1-5.

Statement under Art. 19.1 PCT
In the written opinion of the International Search Authority issued by the China National Intellectual Property Administration as the international search authority for the application (PCT/CN2023/082543), claims 1-6 and 12 of the application do not possess novelty in view of the patent document D1 (WO2020000164A1), and claims 1-12 do not to possess inventive steps in view of the combination of the patent documents D1 (WO2020000164A1), D2 (CN111418088A) and D3 (CN103647034A).

Therefore, the applicant amends the original claim 1 by merging the additional technical features of the original claims 2 and 4 into claim 1. In addition, "tripropylene glycol" and "ethylene glycol" are deleted.

The applicant points out that D1 does not disclose the weight ratio of the adhesive polymer, moisturizing polymer, and inorganic filler as defined in claim 1, and does not disclose the specific type of moisturizing polymer. Therefore, claim 1 possesses novelty in view of D1.

When claim 1 possesses novelty, claim 1 possesses an inventive step.

D1 discloses that: the polymer adhesive comprises at least one combination selected from the group consisting of styrene butadiene latex, styrene acrylic latex, polyvinyl acetate, polyvinyl alcohol, ethyl polyacrylate, polybutyl methacrylate, ethylene vinyl acetate copolymer, and polyurethane.

Claim 1 limits the moisturizing polymer to one or more of polyethylene glycol, polypropylene alcohol, and polyvinyl acetate.

That is to say, the polyvinyl acetate polymer in D1 is used as a polymer adhesive to exert bonding effect. While in this application, the polyvinyl acetate polymer is used as a moisturizing polymer, making the prepared moisturizing coating have good anti-static and high liquid absorption/retention properties. In other words, the technical problem solved by the polyvinyl acetate defined in claim 1 is not the same as that solved by the polyvinyl acetate polymer disclosed in D1. D2 and D3 also do not disclose or teach the use of polyvinyl acetate polymer as a moisturizing coating to solve the static electricity problem of oil-based membranes. Therefore, claim 1 possesses an inventive step.

Claims 2-5 are dependent to claim 1. When the referenced claim 1 involves an inventive step, claims 2-5 also involve inventive steps.

Claim 6 claims a method for preparing a composite oil-based separator, and the reason for its inventive step can be found in the comments on claim 1.

Claims 7-9 are dependent to claim 1. When the referenced claim 6 involves an inventive step, claims 7-9 also involve inventive steps.

Claim 10 claims a secondary battery comprising the composite oil-based separator according to any one of claims 1-5. Given that the composite oil-based separator as claimed in any one of claims 1-5 possesses an inventive step, claim 10 also possesses an inventive step.

The examiner points out that the scope of protection of claim 3 is unclear and does not comply with PCT Article 6. The applicant deletes the two substances "polyvinylidene fluoride homopolymer" and "fluoropolymer" from the original claim 3, and the amended claim 2 complies with PCT Article 6.

The examiner points out that the scope of protection of claim 4 is unclear and does not comply with the provisions of PCT Article 6. The applicant deletes the original claim 4. Thus, the unclear defect of original claim 4 is overcome.
